Europäisches Patentamt

(19) European Patent Office

Office européen des brevets

(11) Publication number : **0 438 301 B1**

# (12) EUROPEAN PATENT SPECIFICATION

(45) Date of publication of patent specification :
**06.09.95 Bulletin 95/36**

(51) Int. Cl.⁶ : **H02K 37/22**

(21) Application number : **91300341.4**

(22) Date of filing : **17.01.91**

(54) **Stepping motor.**

(30) Priority : **17.01.90 JP 7785/90**
**13.08.90 JP 213928/90**

(43) Date of publication of application :
**24.07.91 Bulletin 91/30**

(45) Publication of the grant of the patent :
**06.09.95 Bulletin 95/36**

(84) Designated Contracting States :
**DE FR GB IT NL**

(56) References cited :
**EP-A- 0 283 234**
**DE-A- 2 050 117**
**DE-B- 1 037 572**
**DE-B- 1 613 396**
**US-A- 2 220 751**

(73) Proprietor : **KABUSHIKI KAISHA SIGEL**
**10F, Togeki Building,**
**1-1, Tsukiji 4-chome**
**Chuo-ku, Tokyo (JP)**

(72) Inventor : **Nakanishi, Motoyasu**
**No. 1461-47, Tenma**
**Fuji-shi, Shizuoka-ken (JP)**

(74) Representative : **Tomlinson, Kerry John et al**
**Frank B. Dehn & Co.**
**European Patent Attorneys**
**Imperial House**
**15-19 Kingsway**
**London WC2B 6UZ (GB)**

EP 0 438 301 B1

## Description

This invention relates to a stepping motor widely used as a drive source for office automation equipments, various kinds of automatic production units or the like, and more particularly to an inertial damper structure for a stepping motor which is adapted to damp vibration of the stepping motor and reduce instability of the stepping motor during the step response of the stepping motor.

A stepping motor exhibits excellent functions such as accurate driving, rapid stopping, rapid starting and the like. On the other hand, it has disadvantages that the transient response during rising at the time of starting of rotation is apt to be vibratory and unstable phenomena such as resonance in a fixed frequency domain of a drive power supply and the like fail to permit the rotation of the motor to be smoothly carried out. Accordingly, in order to properly drive an equipment by means of the stepping motor, a mechanism for eliminating such disadvantages as described above is necessarily required. In view of the foregoing, the inventor developed, as disclosed in EP-A-283234, an inertia damper utilizing a gel material while taking notice of the fact that it exhibits good vibration absorbing characteristics. The proposed inertia damper generally includes a mount base, an inertia weight element and a gel element, wherein the mount base and inertia weight element are coupled to each other through the gel element in a vibration absorbing manner and the mount base is mounted on an output shaft of a motor.

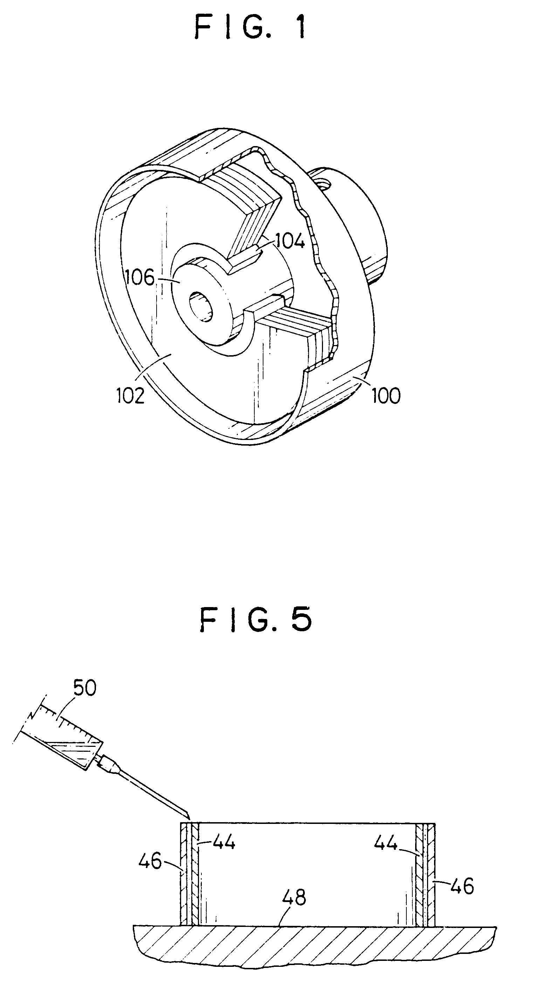

Now, an inertia damper of this type which is currently used will be described hereinafter with reference to Fig. 1. The inertia damper includes a mount base 100, an inertia weight component or element 102 and a gel material or element 104 and is constructed in such a manner that the mount base 100 and inertia weight element 102 are connected to each other in a vibration absorbing manner through the gel element 104 arranged between the inner peripheral surface of the inertia weight element 102 formed into an annular shape and a boss 106 of the mount base 100. Thus, in the conventional inertia damper constructed as described above, a space in which the gel element 104 is arranged is formed into a relatively small dimensions, so that the gel element 104 may very satisfactorily absorb vibration of a small magnitude. However, such construction fails to cause the gel element 104 to satisfactorily absorb vibration of a large magnitude, as well as exhibit good endurance under the operating conditions that a large amount of vibration energy is applied thereto.

Also, the inertia damper is conventionally mounted as a separate element on the stepping motor, therefore, it is required to provide the motor with a mounting shaft extending from one side of the motor in one direction for mounting the inertia damper on the motor therethrough as well as an output shaft in the opposite direction. However, in order to prevent the structure of the stepping motor from being complicated, it is desired to eliminate such a mounting shaft as described above. Thus, it is desirable to provide a stepping motor which is provided with an inertia damper in a manner to be incorporated in the stepping motor rather than as a separate element.

The present invention has been made in view of the foregoing disadvantage of the prior art.

Accordingly, it is an object of the present invention to provide a stepping motor which is capable of exhibiting a function as an inertia damper by itself as well.

It is another object of the present invention to provide a stepping motor which is capable of accomplishing an improvement in responsiveness and the elimination of instability during the operation.

It is a further object of the present invention to provide a stepping motor which is capable of exhibiting satisfactory endurance under various operating conditions.

It is still another object of the present invention to provide a stepping motor which is capable of exhibiting excellent characteristics while preventing the size from being increased.

It is yet another object of the present invention to provide a stepping motor which is capable of facilitating assembly and preventing the structure from being complicated.

It is a still further object of the present invention to provide a stepping motor which is capable of exhibiting satisfactory performance while keeping the structure significantly compact.

In accordance with one aspect of the present invention, there is provided a stepping motor comprising a casing, an output shaft arranged so as to extend outwardly from said casing, a rotor arranged in said casing and connected to said output shaft in said casing and a stator substantially stationarily arranged in said casing and including at least one stator case and an excitation coil means, characterized in that:

a gel element is interposedly arranged in at least one of at least a part of a space defined between said casing and said stator and at least a part of a space defined between said output shaft and said rotor.

In the present invention, the construction that the gel element is arranged in at least a part of the space between the casing and the stator means that the gel element may be interposedly arranged in the overall space between the casing and the stator or a part of the space. Alternatively, this means that the gel element may be interposedly arranged in at least a part of a space(s) between or in components for constituting at least one of the casing and stator. Also, the construction that the gel element is arranged in at least a part of the space between the output shaft and the rotor means that the gel element may be interposedly arranged in the overall space between the output shaft and the rotor or a part of the space. Alternatively, this means that the gel element may be interposedly arranged in at least a part of a space(s) between or in components for constituting at least one of the output shaft and rotor.

In the present invention, the gel element may be directly or indirectly arranged. In the present invention, the construction that the gel element is directly arranged means that it is arranged without using any interstitial or intermediate member or element and the construction that the gel element is indirectly arranged means that it is arranged through any interstitial or intermediate member or element.

The stepping motor of the present invention constructed as described above permits the gel element to function to absorb vibration, resulting in the stepping motor functioning as an inertial damper as well.

These and other objects and many of the attendant advantages of the present invention will be readily appreciated and become better understood by reference to the following detailed description of preferred embodiments of the invention given by way of example only, when considered in connection with the accompanying drawings; wherein:

Fig. 1 is a partly cutaway perspective view showing a conventional inertia damper for a stepping motor;

Fig. 2 is a partially cutaway perspective view showing an embodiment of a stepping motor according to the present invention, which is embodied in the form of an HB type stepping motor;

Fig. 3 is a vertical sectional side elevation view of the stepping motor shown in Fig. 2;

Fig. 4 is a sectional view taken along line IV-IV of Fig. 3;

Fig. 5 is a schematic sectional view showing charging of a gel material in a sleeve structure for forming a gel element;

Fig. 6 is a vertical sectional side elevation view showing another embodiment of a stepping motor according to the present invention, which is embodied in the form of a PM type stepping motor including a laminated core structure;

Fig. 7 is a fragmentary perspective view showing a stator arranged in the stepping motor of Fig. 6;

Fig. 8 is a vertical sectional side elevation view showing a further embodiment of a stepping motor according to the present invention, which is embodied in the form of a PM type stepping motor of a claw pawl structure;

Fig. 9 is a fragmentary sectional perspective view showing a stator arranged in the stepping motor of Fig. 8;

Fig. 10 is a cross sectional view showing the arrangement of a gel element between a rotor and an output shaft;

Fig. 11 is a vertical sectional side elevation view showing still another embodiment of a stepping motor according to the present invention; and

Fig. 12 is a vertical sectional side elevation view showing a still further embodiment of a stepping motor according to the present invention.

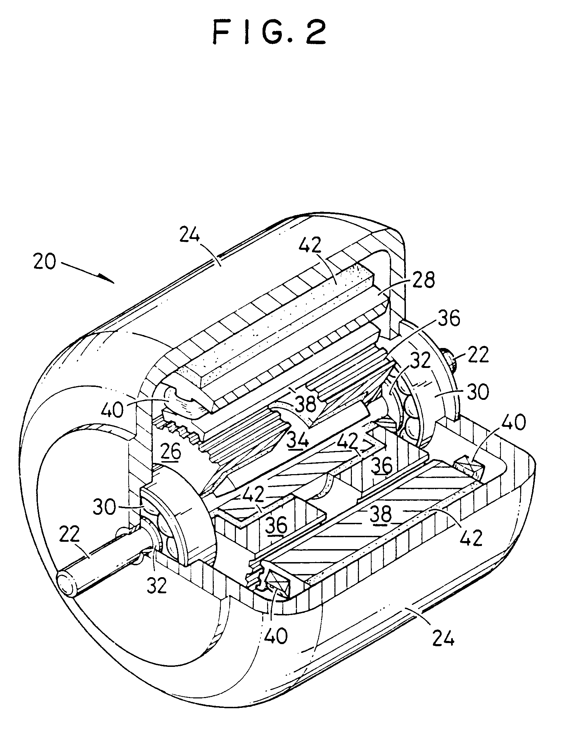

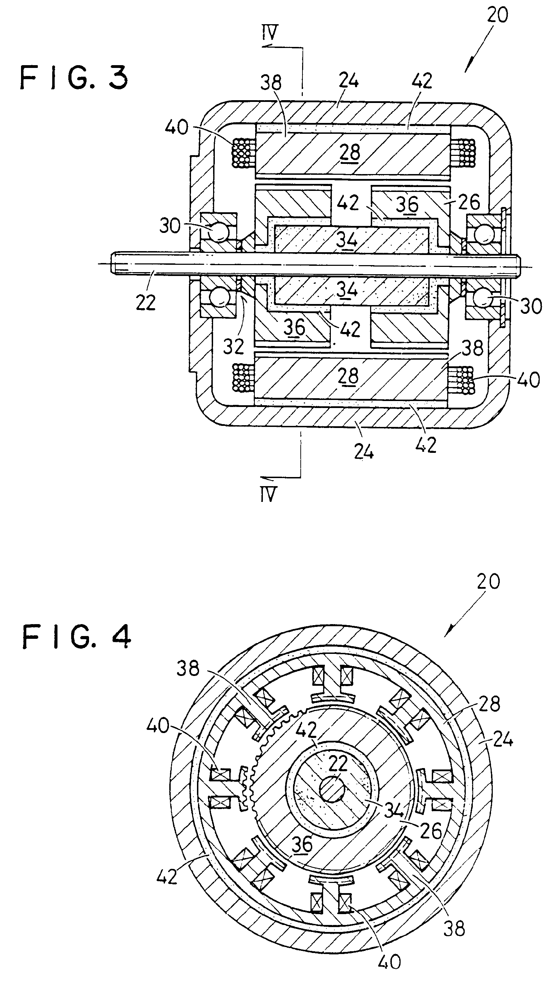

Now, a stepping motor according to preferred embodiments of the present invention will be described hereinafter with reference to Figs. 2 to 12, wherein like reference numerals designate like or corresponding parts throughout.

First, types of a stepping motor to which the present invention is directed will be described hereinafter.

A stepping motor is generally classified into a PM type stepping motor, a VR one and an HB type one depending upon the structure of a magnetic circuit. The PM type stepping motor includes a rotor comprising a permanent magnet of a cylindrical shape and a stator core having excitation coils arranged around the rotor. The VR type stepping motor includes a rotor formed of a material of high magnetic permeability into a gear-like salient pole and a gear-like stator arranged around the rotor. Also, the HB type stepping motor is constructed into a structure combining the PM type and VR type stepping motors, wherein a gear-like stator is arranged around a rotor, which comprises a combination of a gear-like salient pole and a permanent magnet magnetized in the axial direction of an output shaft of the motor. The present invention may be applied to various kinds of stepping motors including the above-described three types of stepping motors.

Figs. 2 to 4 show an embodiment of a stepping motor according to the present invention, which is embodied in the form of an HB type stepping motor. An HB stepping motor of the illustrated embodiment which is generally designated by reference numeral 20 includes an output shaft 22 and a casing 24 formed into a substantially cylindrical shape. The output shaft 22 is arranged so as to outwardly extend through the casing 24 therefrom. In the casing 24 are arranged a rotor 26 connected to or mounted on the output shaft 22 and a stator 28 fixed on the inner surface of the casing 24. The output shaft 22 is rotatably supported at the casing 24 through bearings 30 provided at the casing 24. In the illustrated embodiment, each of the bearings 30 may comprise a ball bearing and is stabilized by applying pre-load of a suitable magnitude thereto by means of washers 32. The rotor 26 functions to convert magnetic energy generated between the rotor 26 and the stator 28 into rotational energy. For this purpose, in the illustrated embodiment, the rotor 26 includes a rotor magnet 34 of a cylindrical shape which is magnetized in the axial direction of the output shaft 22 and a pair of gear-like rotor cores 36 arranged on both ends of the rotor magnet 34 in a manner to surround the rotor magnet and deviated in phase by a 1/2 pitch from each other. The stator 28 includes a stator core 38 and excitation coils 40 wound on the stator core 38. The stator core 38 is arranged in a manner to be spaced by a small distance from the rotor core 36.

In the so-constructed HB type stepping motor 20, a gel element, as indicated at reference numeral 42, may be interposedly arranged in at least a part of a space defined between the casing 24 and the stator 28 and/or at least a part of a space defined between the output shaft 22 and the rotor 26 mounted on the output shaft 22, so that it may function as an inertia damper for absorbing vibration. Such arrangement of the gel element may be directly or indirectly carried out. More particularly, the construction that the gel element 42 is arranged in at least a part of the space between the casing 24 and the stator 28 means that the gel element 42 may be interposedly arranged in the overall space between the casing 24 and the stator 28 or a part of the space. Alternatively, this means that the gel element 42 may be interposedly arranged in at least a part of a space(s) between or in components for constituting the casing 24 and/or stator 28. Also, the construction that the gel element 42 is arranged in at least a part of the space between the output shaft 22 and the rotor 26 means that the gel element 42 may be interposedly arranged in the overall space between the output shaft 22 and the rotor 26 or a part of the space. Alternatively, this means that the gel element 42 may be interposedly arranged in at least a part of a space(s) between or in components for constituting the output shaft 22 and/or rotor 26. Further, the construction that the gel element 42 is directly arranged means that it is arranged without using any interstitial or intermediate member or element and the construction that the gel element 42 is indirectly arranged means that it is arranged through any interstitial or intermediate member or element.

In the embodiment shown in Figs. 2 to 4, the gel element 42 is interposedly arranged in each of the whole space between the casing 24 and the stator 28 and the whole space between the rotor 26 and the output shaft 22. Also, the gel element 42 is directly arranged without using any interstitial or intermediate element. Further, in connection with the gel element 42 arranged between the rotor 26 and the output shaft 22, a part of the gel element is arranged between the output shaft 22 and the rotor cores 36 which are components of the rotor 26 and the remaining part of the gel element is arranged between the rotor cores 36 and the rotor magnet 34 which are the other component of the rotor 26.

Now, the gel element 42 will be described hereinafter. A gel material suitable for use for forming the gel element 42 may be selected from the group consisting of urethane gel, acrylic gel and any other suitable gel materials. In the illustrated embodiment, silicone gel is used as a material for the gel element 42 because it exhibits stable characteristics over a wide temperature range, does not produce any by-product during the curing step and exhibits excellent vibration absorbing performance. Silicone gel consists of dimethyl siloxane units and may be a silicone polymer of the addition reaction type prepared by curing a mixture consisting of components A and B described below. The component A is diorganopolysiloxane of the following general formula (I)

$$RR^1_2SiO - (R^2_2SiO)_nSiR^1_2R \quad (I)$$

wherein R designates an alkenyl group, $R^1$ represents a monovalent, optionally substituted hydrocarbon group free of any aliphatic unsaturated bond, $R^2$ is a monovalent hydrocarbon group at least 50 mol% of which is methyl and at most, if at all, 10 mol% is alkenyl groups and n is a number which is sufficient to permit the viscosity of the component at a temperature of 25°C to be within the range of from 100 cSt ($1cm^2S^{-1}$) to 100,000 cSt ($1000cm^2S^{-1}$). The component B is organohydrogen polysiloxane which has a viscosity of 5000 cSt ($50cm^2S^{-1}$) or less at a temperature of 25°C and has at least three combinations of a Si atom and a hydrogen atom(s) directly bonded to the Si atom in any one molecule. The so-prepared mixture is adjusted so that the molar ratio of the total amount or number of alkenyl groups contained in the component A compared to the total amount or number of hydrogen atoms directly bonded to the Si atoms of the component B is within the range of from 0.1 to 2.0.

Now, the silicone gel will be more detailedly described hereinafter. The above-described component A is a compound which has a straight-chain molecular structure and permits each of the alkenyl groups R at both ends or terminals of the molecule to addition-react with the hydrogen atom(s) directly bonded to the Si atoms of the component B to form a crosslinked structure. The alkenyl groups at both terminals of the molecule are preferably each a lower alkenyl group and more preferably a vinyl group in view of its reactivity. The groups $R^1$ at each terminal of the molecule are monovalent optionally substituted hydrocarbon groups free of any aliphatic unsaturated bond and include, for example, an alkyl group such as a methyl group, a propyl group or a hexyl group, a phenyl group and a fluoroalkyl group and the like.

In the formula (I) described above, the group $R^2$ is a monovalent aliphatic hydrocarbon group and includes, for example, an alkyl group such as a methyl group, a propyl group or a hexyl group, a lower alkenyl group such as a vinyl group, and the like. At least 50 mol% of $R^2$ in formula (I) is a methyl group. The group $R^2$ may include alkenyl groups and, in this case, the amount of alkenyl group for $R^2$ in formula (I) is preferably 10 mol% or less. The amount of alkenyl groups above 10 mol% causes the crosslink density to be excessively increased, resulting in the viscosity of the component A being excessively increased. The value of n is determined so as to permit the viscosity of the component A at a temperature of 25°C to be within the range of from 100 cSt to 100,000 cSt (1-1000 $cm^2S^{-1}$) and preferably from 200 cSt to 20,000 cSt (2-200 $cm^2S^{-1}$).

The above-described component B acts as a crosslinking agent for the component A. The hydrogen atoms directly bonded to the Si atoms of the component B are addition-reacted with alkenyl groups of the component A to effect curing of the component A. The component B which is merely required to exhibit the above-described function may have any molecular structure such as a straight-chain structure, a branched chain structure, a cyclic structure, a network structure or the like. To the silicon atoms of the component B may be bonded organic groups in addition to hydrogen atoms. The organic group is normally a lower alkyl group such as a methyl group. The viscosity of the component B at a temperature of 25°C is 5000 cSt ($50cm^2S^{-1}$) or less and preferably 500 cSt ($5cm^2S^{-1}$) or less. The component B includes, for example, a copolymer of organohydrogen siloxane of which both terminals are blocked with triorganosiloxane groups, a copolymer of diorganosiloxane and organohydrogensiloxane, tetraorgano tetrahydrogen cyclotetrasiloxane, a copolymerized polysiloxane composed of an $HR^1_2SiO$ 1/2 unit and an SiO 4/2 unit, and a copolymerized cyclohaxane composed of a $HR^1_2SiO$ 1/2 unit, a $R^1_3SiO$ 1/2 unit and a SiO 4/2 unit. In these formulas, $R^1$ has the same meaning as described above.

The components A and B are mixed together in such amounts that the molar ratio of the total amount of alkenyl groups on the silicon atoms of the component A to the total amount of hydrogen atoms directly bonded to the silicon atoms of the component B is in the range of 0.1 to 2.0 and preferably 0.1 to 1.0, resulting in the mixture being prepared. Then, the so-obtained mixture is cured by a curing reaction, leading to the silicone gel. The curing reaction may be generally carried out using a catalyst. For this purpose, a platinum catalyst is conveniently used. The platinum catalyst includes, for example, finely divided elemental platinum, chloroplatinic acid, platinum oxide, complex salts of olefins with platinum, platinum alcoholate and complex salts of vinylsiloxane with chloroplatinic acid. Such complex salts may be generally used in an amount of 0.1 ppm or more, in terms of elemental platinum, based on the total amount of the components A and B, and preferably 0.5 ppm or more. The amount of platinum catalyst does not have any specific upper limit; however, if the catalyst is in the form of a liquid or may be used in the form of a solution, good results may be obtained when the catalyst is used in an amount of 200 ppm or less. The above-described component A, component B and catalyst are mixed together to prepare a mixture, which is then allowed to stand or is heated, resulting in being cured, leading to the silicone gel used in the present invention.

The so-obtained silicone gel generally has a rate of penetration of approximately 5 to 250 when measured in accordance with JIS (Japanese Industrial Standard) K-2207-1980 (50 g load). The hardness of such a silicone gel may be adjusted by using the component A in an amount larger than the amount sufficient to form a crosslinked structure by the reaction with hydrogen atoms directly bonded to Si of the component B. Alternatively, the adjustment may be carried out by previously adding silicone oil having methyl groups at both terminals thereof in an amount of from 5 to 75 wt% based on the silicone gel to be prepared. The silicone gel may be adjusted as described above or may be commercially available. Commercially available silicone gel which may be used in the present invention includes silicone gels sold under the designations CF 5027, TOUGH-2, TOUGH-3, TOUGH-4, TOUGH-5, TOUGH-6 and TOUGH-7 from Kabushiki Kaisha Toray Dow Corning Silicone, Japan; silicone gel sold under the designation X-32-902/Cat1300 from Shin-Etsu Kagaku Kogyo Kabushiki Kaisha, Japan; silicone gel sold under the designation F250-121 from Nippon Yunika Kabushiki Kaisha, Japan; and the like.

In addition to the above-described component A, component B and catalyst, components such as a pigment, a curing delay agent, a flame retardant, a filler and the like may be added in amounts which do not cause deterioration of characteristics of the silicone gel. Further, a composite silicone gel material having a microballoon-like filler contained therein may be used. The composite silicone gel used includes, for example, Fillite (registered trademark) commercially available from Nippon Fillite Kabushiki Kaisha, Japan, Expancel (registered trademark) commercially available from Nippon Fillite Kabushiki Kaisha, Japan, Matsumoto Microsphere (trade name) commercially available from Matsumoto Yushi Seiyaku Kabushiki Kaisha, Japan, and the like. Good results may be obtained using a composite silicone gel material prepared by, for example, adding Expancel described above in an amount of 3 wt% to a base comprising CF 5027 described above of which a rate of penetration was adjusted to about 150. In the illustrated embodiment, TOUGH-7 described above of which a rate of penetration was adjusted to 100 was used. The silicone gel having a rate of penetration as high as, for example, about 160 is suitably used to eliminate a resonance phenomenon, whereas the silicone gel having a lower rate of penetration of, for example, 100 is particularly effective to improve settling time.

The above-described arrangement of the gel element 42 between a combination of the rotor magnet 34 and output shaft 22 and the rotor core 36 in the illustrated embodiment causes the gel element 42 to decrease a part of magnetic force of the rotor magnet 34. In order to avoid the problem, magnetic powders may be added to the gel element 42 to maintain the magnetic circuit.

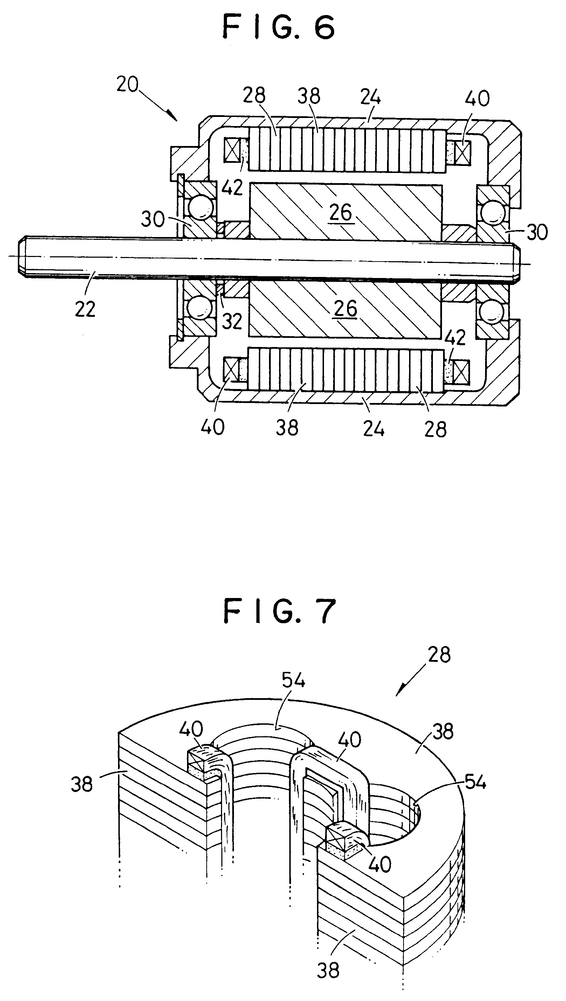

Now, the manner of arrangement of silicone gel serving as the gel element 42 between the casing 24 and the stator core 38 will be described hereinafter. In one method, the stepping motor is temporarily assembled while supporting the stator 28 in a manner to somewhat lift it. Subsequently, the gel material uncured is poured into the space or gap between the casing 24 and the stator core 38 and then cured by heating. Alternatively, the arrangement may be carried out as shown in Fig. 5. More particularly, an inner sleeve 44 and an outer sleeve 46 are combined on a surface plate 48 so as to define an annular gap or space therebetween and then the silicone gel uncured is poured into the gap by means of a syringe 50 to form an assembly comprising the sleeves and gel. Subsequently, the gel is cured and then the assembly is fitted on the stator core 38 through the inner sleeve 44. Thereafter, the casing 24 is fitted on the outer sleeve 46. Such assembling results in the outer sleeve 46 acting as or constituting a part of the casing 24 and the inner sleeve 44 acting as or constituting a part of the stator core 38. Also, the arrangement of the gel element in the manner described above does not change a conventional process for manufacturing a stepping motor and permits the mass production of the stepping motor by merely adding additional steps to the conventional process. Alternatively, only one of the inner and outer sleeves 44 and 46 may be used and fitted on the stator core 38 or in the casing 24. In this instance, the casing 24 or stator core 38 is substituted directly for the other of the inner and outer sleeves. Alternatively, a sleeve which is constructed so as to be divided may be used. In this instance, the arrangement of the gel element may be carried out by cutting the gel material previously formed into a sheet-like shape to form gel element pieces of a strip-like shape and then winding the pieces on the inner or outer periphery of the sleeve.

When it is required to strengthen bonding between the gel element 42 and the casing 24, stator core 38, inner sleeve 44 and/or outer sleeve 46, it is desirable to previously apply a silicone primer and/or a silicone adhesive of the addition reaction type on the surface of each of these members. As detailedly described in Japanese Patent Application Laid-Open Publication No. 242774/1989 which discloses an invention made by the inventor, such a silicone primer includes, for example, Primer A (trade name) commercially available from Kabushiki Kaisha Toray Dow Corning Silicone, Japan, Primer Z-3042 commercially available from Bayer Gohsei Silicone Kabushiki Kaisha, Japan and the like. To the above-described silicone primer may be added a coupling agent such as triethoxysilane or the like. Also, the silicone adhesive of the addition reaction type may be applied after the silicone primer is coated, resulting in the bonding being more effectively improved. A silicone adhesive which performs addition reaction with the silicone gel by heating to cure the silicone gel may be used as such a silicone adhesive of the addition reaction type. The silicone adhesive used includes, for example, KE-1800T commercially available from Shin-Etsu Kagaku Kogyo Kabushiki Kaisha, Japan, SE-1700 commercially available from Kabushiki Kaisha Taray Dow Corning Silicone, Japan and the like. Further, as the silicone adhesive of the addition reaction type may be used a composition comprising such a mixture of diorganopolysiloxane and organohydrogen polysiloxane as described above wherein the molar ratio between the vinyl group of the organohydrogen polysiloxane and the hydrogen of Si-H bond of the organohydrogen polysiloxane is hydrogen-excessive. For example, a composition may be used in which the ratio between the vinyl group and the hydrogen of the Si-H bond is within the range between 1 : 1.05 to 1 : 2.02.

On the surface of each of the members to which the silicone primer and, if required, silicone adhesive are applied is contactedly arranged the silicone gel uncured, which is then heated. This causes not only the silicone gel to be cured but the silicone primer and/or adhesive applied to the inner peripheral surface of the casing 24, the stator core 38 or the like acting as a support for the silicone gel to be reacted with the silicone gel to strengthen joining between the silicone gel and the peripheral cover section 38. When a composite silicone gel material in which a filler is contained is used for forming the gel element 42, it is desirable that an uncured silicone gel material free of a filler is first applied and then the filler containing the silicone gel material uncured is applied thereonto, which are then subject to curing by heating.

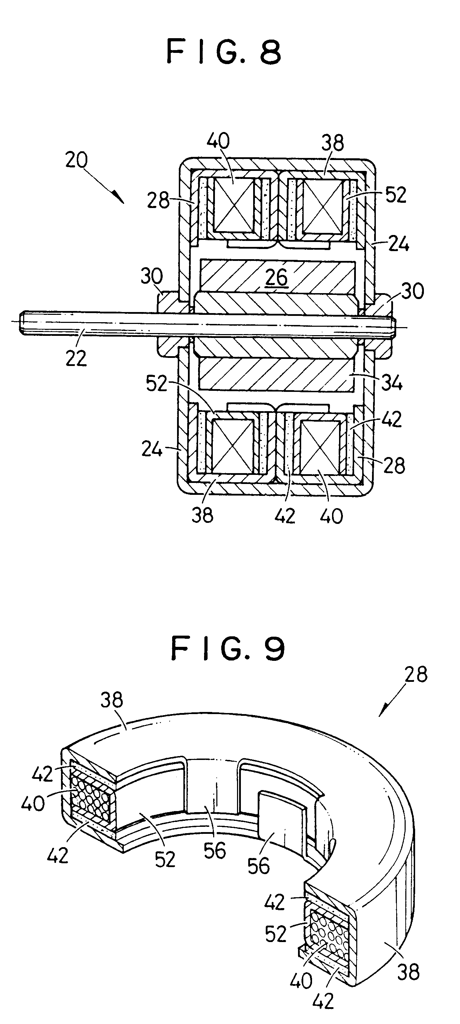

Referring now to Figs. 6 and 7 and Figs. 8 and 9 each showing another embodiment of a stepping motor according to the present invention, a stepping motor of each of the illustrated embodiments is embodied in the form of a PM type stepping motor. A PM type stepping motor is generally classified into a stepping motor of the laminated core type or structure and that of the claw pawl type or structure. The PM type stepping motor shown in Figs. 6 and 7 is embodied into a PM type stepping motor of the laminated core structure. More particularly, the stepping motor of the embodiment of Figs. 6 and 7 includes a casing 24, an output shaft 22 extending through the casing 24 therefrom, a rotor 26 including a magnet connected to or mounted on the output shaft 22, and a stator 28 including a stator core 38 of the laminated type fixed on the inner surface of the casing 24 and excitation coils 40 wound on the stator core 38. The stepping motor 20 of the embodiment shown in Figs. 8 and 9 is embodied in the form of a PM type stepping motor of the claw pawl structure. More particularly, the stepping motor 20 shown in Figs. 8 and 9 includes a casing 24, an output shaft 22 extending through the casing 24 from the casing, a rotor 26 connected to the output shaft 22 and having a cylindrical surface of the multi-pole magnetized type, and two sets of stators 28 fixed on the inner surface of the casing 24 and each including an excitation coil 40 bifilar-wound in a coil bobbin 52 and a stator core 38 arranged outside the coil bobbin 52.

Now, the stators 28 of the respective types will be described hereinafter. In the stator of the laminated core structure, the excitation coils 40 each are wound between cutout-like slots 54 formed at the stator core 38 as shown in Fig. 7. Whereas, in the stator 28 of the claw pawl structure, the excitation coils 40 each are bifilar-wound in the coil bobbin 52 and the stator core 38 is arranged outside the coil bobbin 52 in a manner to be open in a direction opposite to a direction of opening of the coil bobbin 52. Then, stator pawls 56 provided on the upper and lower ends of the stator core 38 are bent so as to surround the coil bobbin 52.

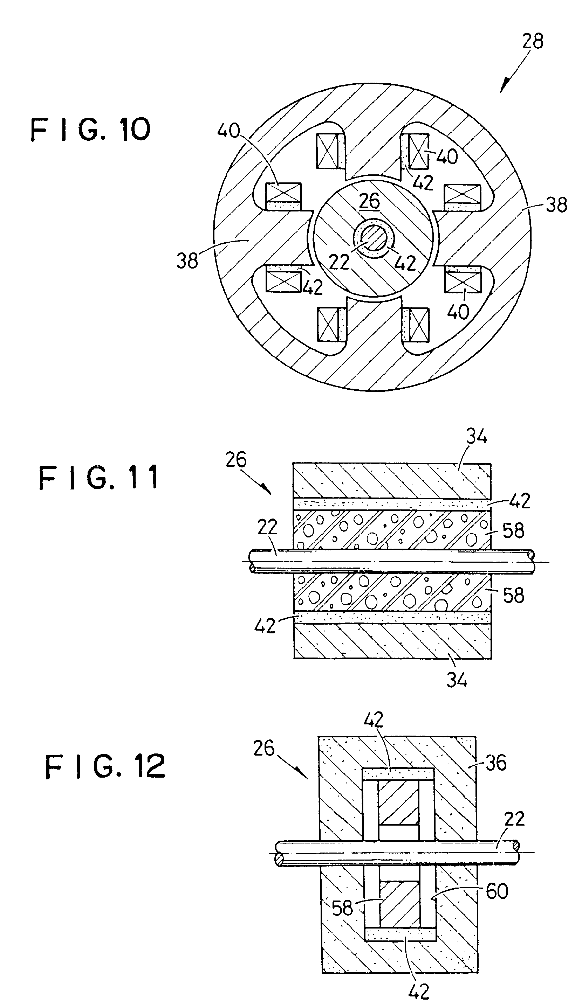

The arrangement of a gel element in the PM type stepping motor constructed as described above is carried out as shown in Figs. 6 to 9. More particularly, in the stepping motor of the laminated core structure shown in Figs. 6 and 7, a gel element 42 is arranged between the stator core 38 and each of the excitation coils 40 so as to serve as an inertia damper for absorbing vibration; whereas, in the stepping motor of the claw pawl structure shown in Figs. 8 and 9, a gel element 42 is arranged between each of the coil bobbins 52 and each of the stator cores 38 for the same purpose. Now, the manner of arrangement of the gel element 42 between the the stator core 38 and the excitation coil 40 in the stepping motor of the laminated core structure will be exemplified. First, the stator core 38 and excitation coils 40 are arranged in place and then the uncured silicone gel described above is poured therebetween. Then, the silicone gel is cured by heating. Alternatively, the silicone gel cured into a sheet-like configuration is wound on the stator core 38 and then each of the excitation coils 40 is arranged on the silicone gel. Further, the gel element 42 acting as an inertia damper, as shown in Fig. 10, may be arranged between the rotor 26 comprising a permanent magnet and the output shaft 22 as well.

Thus, it will be noted that in each of the embodiments described above with reference to Figs. 2 to 10, the gel element 42 is directly arranged between the casing 24 and the stator 28 and/or between the rotor 26 and the output shaft 22 because any interstitial element such as a reinforcing member or the like is not used for arranging the gel element.

Figs. 11 and 12 each show a further embodiment of a stepping motor according to the present invention. Each of the illustrated embodiments is so constructed that a gel element is indirectly arranged. More particularly, in the embodiment of Fig. 11, a rotor 26 comprises a rotor magnet 34 and a reinforcing member 58 acting as an interstitial element such as a bushing, a spacer or the like and interposed between the rotor magnet 34 and an output shaft 22. In the embodiment, the interstitial element 58 is directly mounted on the output shaft 22. Between the reinforcing member or interstitial element 58 and the rotor magnet 34 is arranged a gel element 42. Thus, it will be noted that in the embodiment, the gel element 42 is arranged indirectly in a whole space between the rotor and the output shaft 22 through the interstitial or intermediate element 58. The reinforcing member 58 is preferably made of a non-magnetic material. In the embodiment shown in Fig. 12, a rotor 26 comprises a rotor core 36 comprising a magnet or an iron core and formed with a hollow section and an interstitial element 58 arranged in the hollow section 60. In the embodiment, the interstitial element 58 is arranged so as to be spaced from an output shaft 22 and functions as an inertia element, resulting in the stepping motor exhibiting the function of an inertia damper as well. Also, the stepping motor of Fig. 12 includes a gel element 42 arranged between the rotor core 36 and the inertia or interstitial element 58. In the so-constructed embodiment of Fig. 12, the interstitial element or inertia element 58 may be constructed so as to act as an iron core or magnet as well. Thus, it will be noted that in the stepping motor shown in Fig. 12, the gel element 42 is interposedly arranged indirectly in a part of a space between the rotor 26 and the output shaft 22 through the interstitial or intermediate element 58 serving as the inertia element.

In each of the embodiments shown in Figs. 11 and 12, the gel element 42 may be further arranged between a stator and a casing, for example, as in the embodiment described above with reference to Figs. 2 to 4.

The stepping motor of the present invention is not limited to the above-described embodiments. The present invention may be likewise conveniently applied to the VR type stepping motor. Also, the gel element 42 is not limited to the above-described configurations and/or arrangements. For example, the gel element may be formed into a multi-layer laminate or divided.

As can be seen from the foregoing, the stepping motor of the present invention is so constructed that the stator, excitation coil, rotor and the like each serving as a mass element are coupled through the gel element to the support elements such as the casing, stator core, output shaft and the like. Thus, the elements function as an inertia damper for absorbing vibration as well. For example, such construction of the present invention allows vibration generated at the time of starting of the stepping motor to be effectively absorbed, resulting in it being rapidly damped. Also, this prevents rotation of the stepping motor from being stopped due to resonance at an intermediate frequency, to thereby permit an increase in rotation of the motor to be stably carried out. For example, an experiment made by the inventor revealed that the stepping motor of the present invention constructed in such a manner as shown in Figs. 2 to 4 reduced trimming time to 26 msec, whereas the conventional stepping motor exhibited trimming time as long as 46 msec. The inventor made another experiment wherein load was applied to the stepping motor of Figs. 2 to 4 and the above-described conventional inertia damper substantially according to the procedures of an endurance test conventionally practised for evaluating an inertial damper. As a result, the conventional inertia damper broke when the application of load thereto was repeated 100,000 times, whereas the stepping motor of the present invention did not break although the application of load was repeated 1,000,000 times. Further, the stepping motor of the present invention eliminates a necessity of mounting thereon an inertia damper formed separate therefrom, is simplified in construction and does not deteriorate performance even when a person accidentally touches it.

## Claims

1. A stepping motor (20) comprising a casing (24), an output shaft (22) arranged so as to extend outwardly from said casing, a rotor (26) arranged in said casing and connected to said output shaft in said casing and a stator (28) substantially stationarily arranged in said casing and including at least one stator core (38) and an excitation coil means (40), characterized in that:
   a gel element (42) is interposedly arranged in at least one of at least a part of a space defined between said casing (24) and said stator (28) and at least a part of a space defined between said output shaft (22) and said rotor (26).

2. A stepping motor (20) as defined in Claim 1, wherein said gel element is directly arranged.

3. A stepping motor (20) as defined in Claim 1, wherein said gel element is indirectly arranged.

4. A stepping motor (20) as defined in Claim 1,2 or 3 wherein said gel element is arranged between said casing and said stator.

5. A stepping motor (20) as defined in any preceding claim, wherein said gel element is arranged between said output shaft and said rotor.

6. A stepping motor (20) as defined in Claim 4, wherein said gel element is arranged between said stator core and said excitation coil means.

7. A stepping motor (20) as defined in Claim 4 or 6, wherein said stator further includes a coil bobbin means (52) in which said excitation coil means is bifilar-wound;
   said gel element being arranged between said stator core and said coil bobbin means.

8. A stepping motor (20) as defined in Claim 5, wherein said rotor comprises an interstitial element (58) provided around said output shaft and a rotor magnet (34) provided around said interstitial element;
   said gel element being arranged between said interstitial element and said rotor magnet.

9. A stepping motor (20) as defined in Claim 8, wherein said interstitial element is arranged directly around said output shaft.

10. A stepping motor (20) as defined in Claim 5, wherein said rotor comprises a rotor magnet (34) and rotor cores (36) provided on both ends of said rotor magnet in a manner to surround said rotor magnet;
   said gel element being arranged between said rotor core and a combination of said rotor magnet and output shaft.

11. A stepping motor (20) as defined in Claim 5, wherein said rotor comprises a rotor core (36) provided with a hollow section (60);
   said gel element being arranged in said hollow section through an interstitial element (58) arranged in said hollow section.

12. A stepping motor (20) as defined in Claim 8,9 or 11,
   wherein said interstitial element is an inertia element.

13. A stepping motor as defined in Claim 4, wherein said gel element is further arranged between said output shaft and said rotor.

14. A stepping motor (20) as defined in Claim 13, wherein said gel element arranged between said output shaft and said rotor is positioned between said stator core and said excitation coil means.

15. A stepping motor (20) as defined in Claim 13 or 14,
   wherein said rotor comprises an interstitial element (58) provided directly around said output shaft and a rotor magnet (34) provided around said interstitial element;
   said gel element arranged between said output shaft and said rotor being positioned between said interstitial element and said rotor magnet.

16. A stepping motor (20) as defined in Claim 13, wherein said rotor comprises a rotor magnet (34) and rotor cores (36) provided on both ends of said rotor magnet in a manner to surround said rotor magnet;

said gel element arranged between said output shaft and said rotor being positioned between said rotor core and a combination of said rotor magnet and output shaft.

**Patentansprüche**

1. Schrittmotor (22), der ein Gehäuse (24) umfasst, eine Ausgangswelle (22), die so angeordnet ist, daß sie sich von dem Gehäuse nach außen erstreckt, einen Rotor (26), der in dem Gehäuse angeordnet ist, und der an die Ausgangswelle in dem Gehäuse angeschlossen ist, und einen Stator (28), der im wesentlichen fest in dem Gehäuse angeordnet ist, und wenigstens einen Statorkern (38) und ein Erregerspulenmittel (40) einschließt, dadurch gekennzeichnet, daß: ein Gelelement (42) in wenigstens einem von wenigstens einem Teil eines Raums zwischengelagert angeordnet ist, der zwischen der Ausgangswelle und dem Rotor definiert ist.

2. Wie in Anspruch 1 definierter Schrittmotor (22), in dem das Gelelement direkt angeordnet ist.

3. Wie in Anspruch 1 definierter Schrittmotor (22), in dem das Gelelement indirekt angeordnet ist.

4. Wie in Anspruch 1, 2 oder 3 definierter Schrittmotor (22), in dem das Gelelement zwischen dem Gehäuse und dem Stator angeordnet ist.

5. Wie in einem der vorhergehenden Ansprüche definierter Schrittmotor (22), in dem das Gelelement zwischen der Ausgangswelle und dem Rotor angeordnet ist.

6. Wie in Anspruch 4 definierter Schrittmotor (22), in dem das Gelelement zwischen dem Statorkern und dem Erregerspulenmittel angeordnet ist.

7. Wie in Anspruch 4 oder 6 definierter Schrittmotor (22), in dem der Stator weiterhin ein Spulenwicklungsmittel (52) einschließt, in dem das Erregerspulenmittel zweifädig gewickelt ist; wobei das Gelelement zwischen dem Statorkern und dem Spulenwicklungsmittel angeordnet ist.

8. Wie in Anspruch 5 definierter Schrittmotor (22), in dem der Rotor ein Einlagerungselement (58) umfasst, das um die Ausgangswelle vorgesehen ist, und einen Rotormagneten (34), der um das Einlagerungselement vorgesehen ist; wobei das Gelelement zwischen dem Einlagerungselement und dem Rotormagneten angeordnet ist.

9. Wie in Anspruch 8 definierter Schrittmotor (22), in dem das Einlagerungselement direkt um die Ausgangswelle angeordnet ist.

10. Wie in Anspruch 5 definierter Schrittmotor (22), in dem der Rotor einen Rotormagneten (34) und Rotorkerne (34) umfasst, die auf beiden Enden des Rotormagneten so vorgesehen sind, daß sie den Rotormagneten umgeben; wobei das Gelelement zwischen dem Rotorkern und einer Kombination des Rotormagneten und der Ausgangswelle angeordnet ist.

11. Wie in Anspruch 5 definierter Schrittmotor (22), in dem der Rotor einen Rotorkern (36) umffasst, der mit einem hohlen Abschnitt (60) vorgesehen ist; wobei das Gelelement in dem hohlen Abschnitt durch ein Einlagerungselement (58) angeordnet ist, das in dem hohlen Abschnitt angeordnet ist.

12. Wie in Anspruch 8, 9 oder 11 definierter Schrittmotor (22), in dem das Einlagerungselement ein Trägheitselement ist.

13. Wie in Anspruch 4 definierter Schrittmotor (22), in dem das Gelelement weiterhin zwischen der Ausgangswelle und dem Rotor angeordnet ist.

14. Wie in Anspruch 13 definierter Schrittmotor (22), in dem das zwischen der Ausgangswelle und dem Rotor angeordnete Gelelement zwischen dem Statorkern und dem Erregerspulenmittel gelagert ist.

15. Wie in Anspruch 13 oder 14 definierter Schrittmotor (22), in dem der Rotor ein Einlagerungselement (58) umfasst, das direkt um die Ausgangswelle vorgesehen ist, und einen Rotormagneten (34), der um das Einlagerungselement vorgesehen ist; wobei das zwischen der Ausgangswelle und dem Rotor angeordnete Gelelement zwischen dem Einlagerungselement und dem Rotor gelagert ist.

16. Wie in Anspruch 13 definierter Schrittmotor (22), in dem der Rotor einen Rotormagneten (34) und Rotorkerne (36) umfasst, die auf beiden Enden des Rotormagneten so vorgesehen sind, daß sie den Rotormagneten umgeben; wobei das zwischen der Ausgangswelle und dem Rotor angeordnete Gelelement zwischen dem Rotorkern und einer Kombination des Rotormagneten und der Ausgangswelle gelagert ist.

## Revendications

1. Moteur pas à pas (22) comportant une enveloppe (24) un axe de sortie (22) disposé de façon telle à se prolonger hors de ladite enveloppe, un rotor (26) disposé dans ladite enveloppe et raccordé audit axe de sortie dans ladite enveloppe et un stator (28) essentiellement fixe disposé dans ladite enveloppe et comportant au minimum un noyau de rotor (38) et une bobine d'excitation (40), caractérisé en ce que:
   un élément sous forme de gel (42) est agencé par interposition dans l'un ou l'autre d'une partie au minimum du vide défini entre ladite enveloppe et d'une partie au minimum du vide défini entre ledit axe de sortie et ledit rotor.

2. Moteur pas à pas (22) tel que défini à la revendication 1, dans lequel ledit élément sous forme de gel est agencé directement.

3. Moteur pas à pas (22) tel que défini à la revendication 1, dans lequel ledit élément sous forme de gel est agencé indirectement.

4. Moteur pas à pas (22) tel que défini à la revendication 1, 2, ou 3 dans lequel ledit élément sous forme de gel est agencé entre ladite enveloppe et ledit stator.

5. Moteur pas à pas (22) tel que défini à l'une quelconque des revendications précédentes dans lequel ledit élément sous forme de gel est agencé entre ledit axe de sortie et ledit rotor.

6. Moteur pas à pas (22) tel que défini à la revendication 4, dans lequel ledit élément sous forme de gel est agencé entre ledit noyau de stator et ladite bobine d'excitation.

7. Moteur pas à pas (22) tel que défini à la revendication 4 ou 6, dans lequel ledit stator comporte un moyen à bobine d'enroulement (52) dont l'enroulement de bobine d'excitation est bifilaire;
   ledit élément sous forme de gel étant agencé entre ledit noyau de stator et ledit moyen à bobine d'enroulement.

8. Moteur pas à pas (22) tel que défini à la revendication 5, dans lequel ledit rotor comporte un moyen d'interstice (58) prévu autour dudit axe de sortie et un rotor aimant (34) prévu autour dudit moyen d'interstice (58);

ledit élément sous forme de gel étant agencé entre ledit moyen d'interstice (58) et ledit aimant de rotor.

9. Moteur pas à pas (22) tel que défini à la revendication 8, dans lequel ledit moyen d'interstice (58) est agencé directement autour de l'axe de sortie.

10. Moteur pas à pas (22) tel que défini à la revendication 5, dans lequel le rotor comporte un rotor aimant (34) et des noyaux de rotor (36) prévus aux deux extrémités dudit aimant de rotor de telle façon à entourer ledit aimant de rotor;
   ledit élément sous forme de gel étant agencé entre ledit noyau de rotor et une combinaison dudit rotor aimant et de l'axe de sortie.

11. Moteur pas à pas (22) tel que défini à la revendication 5, dans lequel le rotor comporte un aimant de rotor (34) comportant une zone creuse (60;
   ledit élément sous forme de gel étant agencé dans ladite zone creuse (60) au travers d'un moyen d'interstice (58) agencé dans ladite zone creuse.

12. Moteur pas à pas (22) tel que défini à la revendication 8, 9 ou 11, dans lequel le moyen d'interstice (58) est un moyen d'inertie.

13. Moteur pas à pas (22) tel que défini à la revendication 4, 9 ou 11, dans lequel ledit élément sous forme de gel étant en outre agencé entre l'axe de sortie et ledit rotor.

14. Moteur pas à pas (22) tel que défini à la revendication 13, dans lequel ledit élément sous forme de gel agencé entre ledit axe de sortie et ledit rotor est disposé entre le noyau de stator et les moyens à bobine d'excitation.

15. Moteur pas à pas (22) tel que défini à la revendication 13 ou 14, dans lequel rotor comporte un élément d'interstice (58) prévu directement autour de l'axe de sortie et un rotor aimant (34) prévu autour dudit élément d'interstice;
   ledit élément sous forme de gel agencé entre ledit axe de sortie et ledit rotor étant situé entre ledit élément d'interstice et ledit rotor aimant.

16. Moteur pas à pas (22) tel que défini à la revendication 13, dans lequel ledit rotor comporte un rotor aimant (34) et des noyaux de rotor (36) prévus aux deux extrémités dudit rotor aimant de façon à entourer ledit rotor aimant;
   ledit élément sous forme de gel agencé entre ledit axe de sortie et ledit rotor étant situé entre le noyau de rotor et une combinaison dudit rotor aimant et d'axe de sortie.

# F I G. 1

# F I G. 5

# FIG.2

FIG. 3

FIG. 4

# F I G. 6

# F I G. 7

# F I G. 8

# F I G. 9

FIG. 10

FIG. 11

FIG. 12